(19) Europäisches Patentamt
European Patent Office
Office européen des brevets

(11) **EP 1 617 495 B1**

(12) **EUROPEAN PATENT SPECIFICATION**

(45) Date of publication and mention
of the grant of the patent:
**20.11.2013 Bulletin 2013/47**

(21) Application number: **04724759.8**

(22) Date of filing: **31.03.2004**

(51) Int Cl.:
*H01M 2/16* *(2006.01)*       *H01M 2/14* *(2006.01)*

(86) International application number:
**PCT/JP2004/004616**

(87) International publication number:
**WO 2004/088774 (14.10.2004 Gazette 2004/42)**

(54) **STORAGE BATTERY SEPARATOR AND STORAGE BATTERY**

SEPARATOR FÜR EINE SPEICHERBATTERIE UND SPEICHERBATTERIE

SEPARATEUR POUR BATTERIE D'ACCUMULATEURS ET BATTERIE D'ACCUMULATEURS

(84) Designated Contracting States:
**ES FR GB IT**

(30) Priority: **31.03.2003   JP 2003096662**

(43) Date of publication of application:
**18.01.2006   Bulletin 2006/03**

(73) Proprietor: **Nippon Sheet Glass Co.,Ltd.**
**Tokyo 105-8552 (JP)**

(72) Inventors:
 • **Mitani, Takuo**
   **Hofu-shi,**
   **Yamaguchi 747-0062 (JP)**
 • **Sugiyama, Shoji**
   **Ogaki-shi,**
   **Gifu 503-0831 (JP)**
 • **Kakizaki, Yoshinobu**
   **Ogaki-shi,**
   **Gifu 503-0973 (JP)**
 • **Shimizu, Makoto**
   **Fuwa-gun,**
   **Gifu 503-2121 (JP)**

(74) Representative: **Schmidt-Evers, Jürgen**
**Mitscherlich & Partner**
**Patent- und Rechtsanwälte**
**Sonnenstrasse 33**
**80331 München (DE)**

(56) References cited:
**EP-A- 0 466 302       JP-A- 07 029 593**
**JP-A- 07 048 799       JP-A- 07 220 709**
**JP-A- 08 264 171       JP-A- 09 265 204**
**JP-A- 10 180 961       JP-A- 2003 036 831**
**US-A- 3 384 537       US-A- 3 785 922**
**US-A- 4 179 331       US-A- 4 417 950**
**US-A- 4 618 401       US-A- 5 436 094**

EP 1 617 495 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention concerns a separator for use in storage battery comprising a paper sheet formed by wet process and mainly composed of glass fibers, and a storage battery using the separator.

Background Art

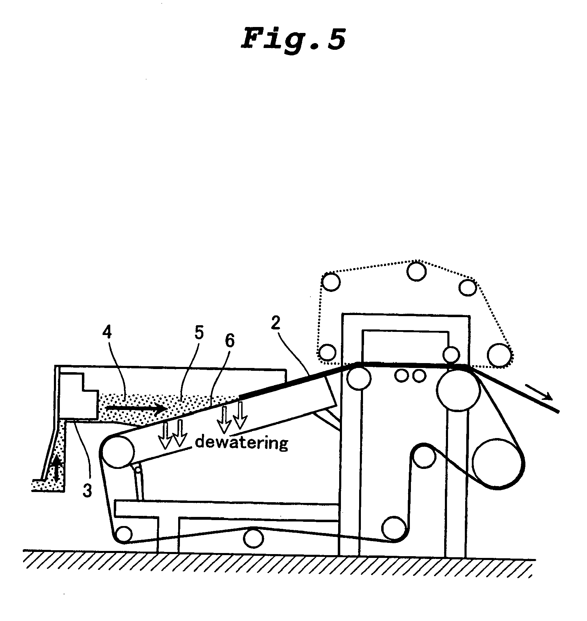

Heretofore, a separator for use in storage battery comprising a paper sheet formed by wet process and mainly composed of glass fibers has been manufactured by using an inclined-type papering machine as shown in Fig. 5. In the drawing, fine arrows indicate the direction along which a paper stock solution 4 moves and fat arrows indicate the dewatering direction.

However, in a case of manufacturing a paper sheet formed by wet process and mainly composed of glass fibers by using an inclined-type papering machine, a forming wire 6 is moved obliquely upward from a portion below a pool 5 filled with the paper stock solution 4 in which glass fibers are dispersed in water while dewatering from the lower surface of the forming wire 6, and glass fibers are accumulated on the upper surface of the forming wire 6 to form a glass fiber layer 2. Accordingly, this results in a problem that relatively fine fibers are accumulated on the back-side surface of the sheet (on the side abutting against the forming wire 6), while relatively large fibers are accumulated on the right-side surface (on the side opposed to the abutting surface to the forming wire 6), thereby making the fiber distribution not uniform in the direction of the thickness of the sheet. Further, since relatively large fibers are accumulated on the right-side surface of the sheet, it also results in a problem that the surface smoothness is extremely poor at the right-side surface of the sheet. Further, since paper making process is conducted while moving the forming wire 6 that constitutes an accumulation surface of the glass fibers, that is a surface for forming the glass fiber layer 2, as soon as one end of a fiber reaches on the surface of the forming wire 6, the fiber tends to be pulled in the moving direction of the forming wire 6. Accordingly, fibers are oriented more in the moving direction of the forming wire 6, that is, in the longitudinal direction of the sheet, to also result in a problem of making the fiber orientation not uniform in the longitudinal and the cross directions of the sheet (with directionality in fiber orientation). Particularly, since the problem becomes more conspicuous when the paper making speed increases, this constitutes one of factors that the paper making speed can not be increased easily.

Such a problem may be remarkable in a case of using the separator as the separator for use in a valve regulated lead-acid battery. At first, in a case where the distribution of fibers in the direction of the thickness of the sheet is not uniform, that is, when gradient is formed to the fiber distribution, the same trend appears also in the distribution of the density along the direction of the thickness to result in the difference for the wicking velocity of an electrolyte between the right-side and the back-side surfaces of the sheet. Accordingly, this makes the moveability of the electrolyte not uniform during charge and discharge to vary the battery performance. Further, when the surface smoothness of the sheet is poor, adhesion with an electrode plate is worsened, oxygen gas recombination reaction is no more taken place smoothly to cause degradation of the battery performance. Further, in a case where the fiber distribution is not uniform in the longitudinal and the cross directions of the sheet (with directionality in fiber orientation), a difference is caused to the wicking velocity of the electrolyte between the longitudinal and the cross directions of the sheet. In addition, in a case where the paper making speed can not be increased greatly, it is difficult to improve the productivity, that is, to reduce the manufacturing cost.

In view of the above, it is an object of the present invention to provide a separator for use in storage battery comprising a paper sheet formed by wet process and mainly composed of glass fibers in which the fiber distribution is uniform in the longitudinal and the cross directions of the separator, the fiber orientation is at random in the longitudinal and the cross directions of the separator, or the fiber distribution is uniform in the longitudinal and the cross directions and in the direction of the thickness of the separator, the fiber orientation is at random in the longitudinal and the cross directions of the separator, and the randomness of the fiber orientation in the longitudinal and the cross directions is uniform in the direction of the thickness of the separator, or, further, the surface state at the right-side and the back-side surfaces of the separator is favorable, as well as a storage battery using the separator described above.

Disclosure of the invention

For attaining the foregoing object, a separator for use in storage battery comprising a paper sheet formed by wet process and composed of glass fibers of 100% by weight according to the present invention is described in claim 1.

Further, a separator for use in storage battery as described in claim 2 is characterized in that the average value for a difference of a wicking velocity (time required for absorbing up to 5 cm height) between the longitudinal and the cross directions of the separator for use in storage battery is between 3% and 7% in the separator for use in storage battery according to claim 1.

Further, a separator for use in storage battery as described in claim 3 is characterized in that the average value for a difference of a wicking velocity (time required for absorbing up to 5 cm height) between the right-side and the back-side surfaces of the separator for use in storage battery is between 6.1% and 10% in the separator for use in storage battery according to claim 2.

Further, a separator for use in storage battery as described in claim 4 is characterized in that the separator for use in storage battery is manufactured by using an inclined-type papering machine provided with a pond regulator in the separator for use in storage battery according to claim 1.

Further, a separator for use in storage battery as described in claim 5 is characterized in that the separator for use in storage battery is manufactured by using a twin wire-type papering machine in the separator for use in storage battery according to claim 1.

Further, a separator for use in storage battery as described in claim 6 is characterized in that it is used for a valve regulated storage battery in the separator for use in storage battery according to claim 1.

Further, for attaining the foregoing object , a storage battery according to the present invention is characterized by using a separator for use in storage battery according to claim 1 as described in claim 7.

Brief Description of the Drawings

Fig. 1 is an entire view showing a schematic constitution of an inclined-type papering machine provided with a pond regulator for manufacturing a separator for use in storage battery according to the invention.

Fig. 2 is an entire view showing a schematic constitution of a twin wire-type papering machine for manufacturing a separator for use in storage battery according to the invention.

Fig. 3 is an SEM (Scanning Electron Microscope) photograph showing an entire portion of a cross section, an upper layer, an intermediate layer, and a lower layer of the cross section of a separator for use in storage battery of Examples 2 to 5 and Comparative Example 2.

Fig. 4 is an SEM photograph showing the right-side and the back-side surfaces of a separator for use in storage battery of Examples 2 to 5 and Comparative Example 2.

Fig. 5 is en entire view showing a schematic constitution of an inclined-type papering machine for manufacturing an existent separator for use in storage battery.

Best Mode for Practicing the Invention

Now, embodiments of the present invention are to be described with reference to the drawings. For easy understanding of explanation, an existent inclined-type papering machine is at first described again, and then, an inclined-type papering machine provided with a pond regulator and a twin wire-type papering machine used in the invention are to be described.

At first, in the existent inclined-type papering machine, as shown in Fig. 5 described above, for obtaining a glass fiber layer 2 from a paper stock solution 4 in which glass fibers are dispersed in water, dewatering is applied only from the lower side of the plane of a wire 6 on which glass fibers are accumulated, that is, from one side (back-side surface) of the glass fiber layer 2. In this case, a pool 5 is formed by using a great amount of water for improving the dispersibility of the glass fibers. The paper stock solution 4 initially has a constant flow rate upon supplying from a paper stock solution supply port 3, but the flow rate is gradually lost, because the liquid height in the pool 5 is high. Accordingly, the glass fibers in the paper stock solution 4 substantially take a state approximate to that of spontaneous settling in the pool 5. Therefore, it is difficult to obtain the glass fiber layer 2 of uniform fiber distribution in the direction of the thickness. Further, while the pool 5 is decreased in the size by controlling water to a smaller amount, no sufficient dispersion can be obtained before the paper stock solution supply port 3. Further, since the glass fibers in the form accumulated in the spontaneous settling state are accumulated on the surface of the moving forming wire 6, fibers are tended to be oriented more in the moving direction of the forming wire 6 and it is also difficult to obtain the glass fiber layer 2 with the fiber orientation being at random (with no directionality in the fiber orientation) in the longitudinal and the cross directions.

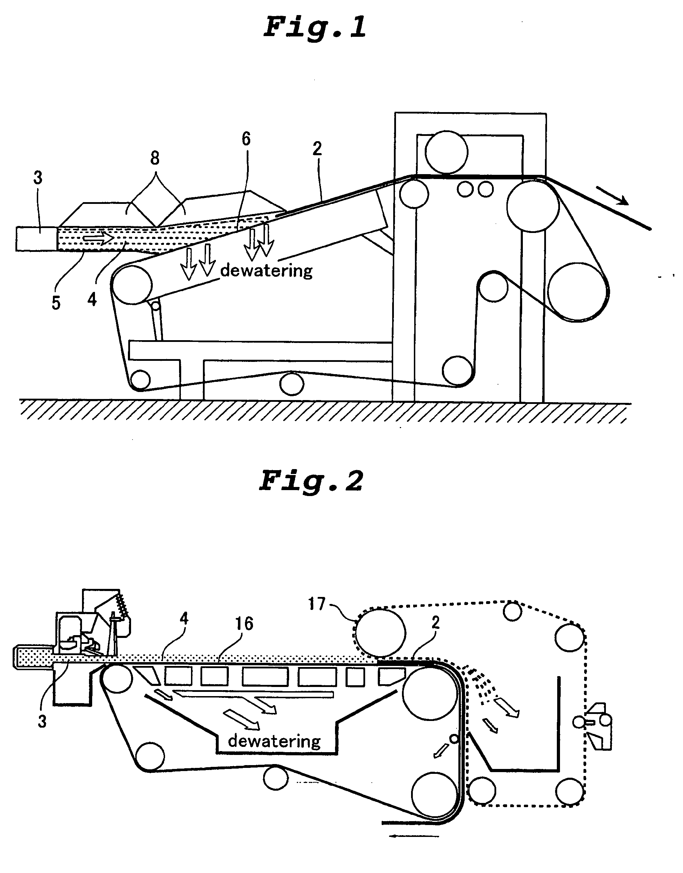

On the contrary, while the inclined-type papering machine provided with a pond regulator used for the invention is identical with the existent inclined-type papering machine in view of the basic constitution, it is different by the provision of a pond regulator 8 over the pool 5. As shown in Fig. 1, by pressing the liquid surface of the pool 5 by the pond regulator 8 when dewatering is applied from the lower side of the surface of the forming wire 6, the paper stock solution 4 supplied from the paper stock solution supply port 3 can be moved onto the forming wire 6 without lowering the flow rate. Particularly, in this invention, it is controlled such that the flow rate of the paper stock solution 4 is substantially equal with the moving speed of the forming wire 6. Accordingly, the paper stock solution 4 always flow at a constant flow rate and the glass fibers in the paper stock solution 4 are not settled spontaneously but transferred in a state where the glass fibers are dispersed at random in the paper stock solution 4 onto the forming wire 6 and processed into paper. In addition, since the flow rate of the paper stock solution 4 is substantially identical with the moving speed of the forming wire 6, the glass fibers are not pulled in the moving direction of the forming wire 6. Accordingly, the glass fiber layer 2 in which the fiber distribution of the glass fibers is uniform in the longitudinal and the cross directions and in the direction of the thickness, the fiber orientation is at random in the longitudinal and the cross directions (with no directionality in the fiber orientation) and the randomness of the fiber orientation in the longitudinal and the cross directions are uniform in the direction of the thickness can be obtained easily.

Further, a twin wire-type papering machine used in the invention, as shown in Fig. 2, in order to obtain a glass fiber layer 2 from the paper stock solution 4 in which glass fibers are dispersed in water, is structured such that dewatering is applied simultaneously from both sides put between two wires 16 and 17, that is, from both surfaces of the glass fiber layer 2. In this case, while a great amount of water is used for improving the dispersibility of the glass fibers, a pool 5 as in the case of the existent inclined-type papering machine shown in Fig. 5 is not formed. Further, while the glass fibers in the paper stock solution 4 are partially dewatered during transportation by the forming wire 16, even when the dispersed state of the glass fibers in the paper stock solution 4 becomes not uniform, since the glass fibers in the paper stock solution 4 are agitated by the backing wire 17, as a second wire, the glass fiber layer 2 is formed in a state where the glass fibers are uniformly dispersed in the paper stock solution 4. Further, due to the basic difference of the dewatering system, since the glass fibers are not accumulated in the spontaneous settling state as in the case of the existent inclined-type papering machine, the glass fibers are not pulled in the moving direction of the forming wire 16 as well. Accordingly, the glass fiber layer 2 in which the fiber distribution of the glass fibers is uniform in the longitudinal and the cross directions and in the direction of the thickness, the fiber orientation is at random in the longitudinal and the cross directions (with no directionality in the fiber orientation), and the randomness of the fiber orientation in the longitudinal and the cross directions is uniform in the direction of the thickness can be obtained easily. Arrows in the drawing show the dewatering direction.

The separator for use in storage battery according to the invention comprises a paper sheet formed by wet process and mainly composed of glass fibers and may contain, in addition to the glass fibers, inorganic powder such as silica, fibers or resins such as polyolefin, polyester, and acrylonitrile excellent in acid resistance and oxidation resistance.

The examples of the present invention are to be explained in detail with the comparative examples, but the invention is not restricted to those examples.

Example 1

100 mass% of fine glass fibers with an average fiber diameter of 0.8 $\mu$m were beaten using paper making water at pH of 2.5, and processed into paper at a paper making speed of 48 m/min by using an inclined-type papering machine provided with a pond regulator, to obtain a separator for use in a valve regulated lead-acid battery of 1.1 mm thickness and with 154 g/m$^2$ of grammage.

Example 2

100 mass% of fine glass fibers with an average fiber diameter of 0.8 $\mu$m were beaten using paper making water at pH of 2.5, and processed into paper at a paper making speed of 24 m/min by using an inclined-type papering machine provided with a pond regulator, to obtain a separator for use in a valve regulated lead-acid battery of 2.2 mm thickness and with 308 g/m$^2$ of grammage.

Example 3

100 mass% of fine glass fibers with an average fiber diameter of 0.8 $\mu$m were beaten using paper making water at pH of 2.5, and processed into paper at a paper making speed of 80 m/min by using a twin wire-type papering machine, to obtain a separator for use in a valve regulated lead-acid battery of 1.0 mm thickness and with 135 g/m$^2$ of grammage.

Example 4

100 mass% of fine glass fibers with an average fiber diameter of 0.8 $\mu$m were beaten using paper making water at pH of 2.5, and processed into paper at a paper making speed of 300 m/min by using a twin wire-type papering machine, to obtain a separator for use in a valve regulated lead-acid battery of 1.0 mm thickness and with 135 g/m$^2$ of grammage.

Example 5

100 mass% of fine glass fibers with an average fiber diameter of 0.8 μm were beaten using paper making water at pH of 2.5, and processed into paper at a paper making speed of 80 m/min by using a twin wire-type papering machine, to obtain a separator for use in a valve regulated lead-acid battery of 2.0 mm thickness and with 270 g/m$^2$ of grammage.

Comparative Example 1

100 mass% of fine glass fibers with an average fiber diameter of 0.8 μm were beaten using paper making water at pH of 2.5, and processed into paper at a paper making speed of 20 m/min by using an inclined-type short net papering machine, to obtain a separator for use in a valve regulated lead-acid battery of 1.0 mm thickness and with 135 g/m$^2$ of grammage.

Comparative Example 2

100 mass% of fine glass fibers with an average fiber diameter of 0.8 μm were beaten using paper making water at pH of 2.5, and processed into paper at a paper making speed of 10 m/min by using an inclined-type short net papering machine, to obtain a separator for use in a valve regulated lead-acid battery of 2.0 mm thickness and with 270 g/m$^2$ of grammage.

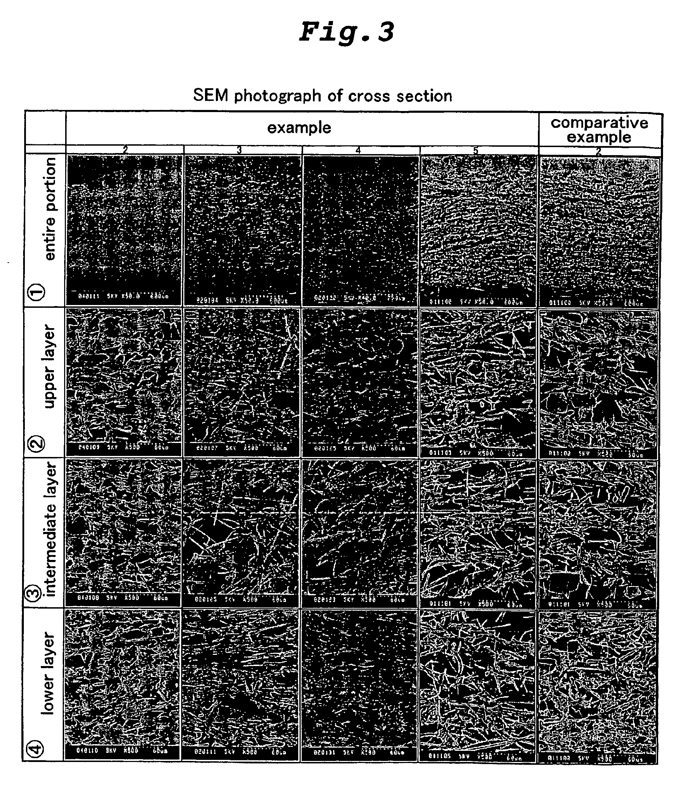

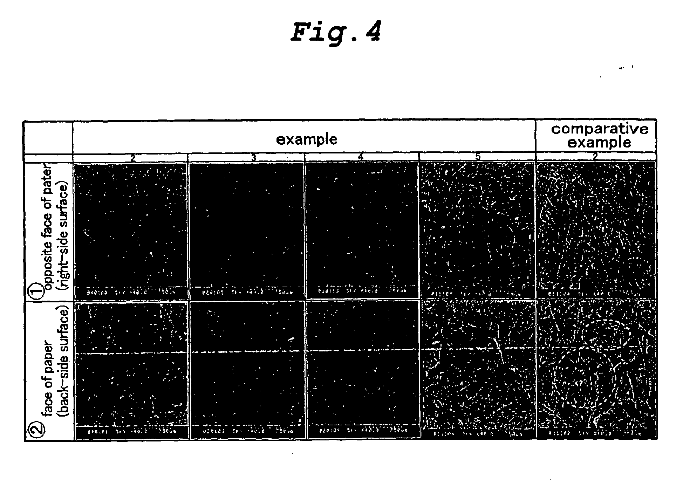

Then, for each of the separators of Examples 1 to 5 and Comparative Examples 1 and 2 obtained as described above, properties of each separator including thickness, grammage, density, difference in the wicking velocity between the longitudinal and the cross directions, difference in the wicking velocity between the right-side and the back-side surfaces, the surface roughness (right-side, back-side), and the difference of the surface roughness between the right-side and the back-side surfaces were measured. The results are shown in Table 1. Further, the right-side and the back-side surfaces and the cross section for each of the separators of Examples 2 to 5 and Comparative Example 2 were observed by an electron microscope to confirm the fiber distribution state, etc. Photographs are shown in Fig. 3 and Fig. 4, respectively.

Then, each of the separators of Examples 1 to 5 and Comparative Examples 1 to 2 obtained as described above was assembled into a valve regulated lead-acid battery at 2V-33 Ah, and the battery performances of initial capacity and cycle life (number of cycles) were measured. The results are shown in Table 1.

The test methods for the sheet properties and the battery performances are as shown below.

For measuring the sheet properties, each of the separators of Examples 1 to 5 and Comparative Examples 1 and 2 was manufactured by 10 lots and Table 1 contains numerical values for the average or range thereof.

The longitudinal direction of the separator corresponds to the length direction of products upon production of separators (machine direction) and, on the other hand, the cross direction of the separator corresponds to the width direction of products upon production of separators.

Further, the right-side surface of the separator means the right-side surface upon production of separators (the surface opposite to the surface abutting against the forming wires 6, 16) and, on the other hand, the back-side surface of the separator means the back-side surface upon production of separators (the surface abutting against the forming wires 6, 16).

(Difference of the wicking velocity between the longitudinal and the cross directions)

For evaluating the uniformity of the fiber distribution and the randomness of the fiber orientation of the separator for use in storage battery in the longitudinal and the cross directions, the wicking velocity of the longitudinal direction and the wicking velocity of the cross direction of the separator were measured respectively, and the difference of the wicking velocity between both of them was calculated based on the result.

For the measurement of the wicking velocity, a separator with 25 mm width and 10 cm height or more was used as a specimen, the specimen was dipped in a vertical state by 1 cm at a lower end thereof in sulfuric acid at 1.30 specific gravity and the time (sec) required for absorbing sulfuric acid up to 5 cm was measured.

The difference of the wicking velocity was calculated according to the following equation:

```
{absolute value for (wicking velocity of the longitudinal direction  -  wicking  velocity  of  the  cross

direction)}/{(wicking velocity of the longitudinal direction

+ wicking velocity of the cross direction)/2} × 100
```

(Difference of the wicking velocity between the right-side and the back-side surfaces)

For evaluating the uniformity of the fiber distribution in the direction of the thickness of the separator for use in storage battery, and the uniformity in the direction of the thickness of the randomness of the fiber orientation in the longitudinal and the cross directions thereof, the wicking velocity of the right-side surface and the wicking velocity of the back-side surface of the separator were measured respectively, and the difference of the wicking velocity between both of them was calculated based on the result.

For the measurement of the wicking velocity, a separator with 25 mm width and 10 cm height or more was used as a specimen, the specimen was dipped in a vertical state by 1 cm at a lower end thereof in sulfuric acid at 1.30 specific gravity and the time (sec) required for absorbing sulfuric acid up to 5 cm was measured.

The difference of the wicking velocity was calculated according to the following equation:

```
{absolute value for (wicking velocity of the right-side surface

- wicking  velocity  of  the  back-side  surface)}/{(wicking

velocity of the right-side surface + wicking velocity of the

back-side surface)/2} × 100
```

[Surface roughness] [Difference of the surface roughness between the the right-side and the back-side surfaces]

The right-side and the back-side surfaces of the separator were visually observed respectively and the concavity/convexity degree was evaluated according to ranks from 1 to 5 as the surface roughness. Further, the difference between them (absolute value) was defined as the difference of the surface roughness. That is, the maximum difference of the surface roughness is 4 and the minimum difference thereof is 0. The surface roughness was ranked as

1: smooth,
2: partially having concavity/convexity.
3: concavity/convexity was small,
4: concavity/convexity was medium, and
5: concavity/convexity was large.

[Microscopic observation for the cross section and the right-side and the back-side surfaces of the separator]

After rapidly refrigerating the separator so as not to collapse the structure of the separator, it was cut into an appropriate size and put to SEM observation. The magnifying factor was 40 to 50x for the entire cross section, 500x for each portion of the cross sections (upper layer, intermediate layer, lower layer) and 40x for the right-side and the back-side surfaces.

[Initial capacity]

The capacity of the initial state of battery was measured.

[Cycle life (number of cycles)]

Cycle life test was conducted with charging at 1A x 2h and discharging at 0.4A $\times$ 6h being as 1 cycle.

Table 1

| | | Item | Unit | Example 1 | Example 2 | Example 3 | Example 4 | Example 5 | Comp. Example 1 | Comp. Example 2 |
|---|---|---|---|---|---|---|---|---|---|---|
| Manufacturing condition | | Type of papering machine | - | Inclined-type (pond regulator) | | Twin wire-type | | | Inclined-type | |
| | | Paper making speed | m/min | 48 | 24 | 80 | 300 | 80 | 20 | 10 |
| | | Material blending | mass% | Glass fiber 100% | | | | | Glass fiber 100% | |
| Sheet properties *1 | Thickness | Average | mm | 1.10 | 2.20 | 1.00 | 1.00 | 2.00 | 1.00 | 2.00 |
| | Grammage | Average | g/m² | 154 | 308 | 135 | 135 | 270 | 135 | 270 |
| | Density | Average | g/cm³ | 0.140 | 0.140 | 0.135 | 0.135 | 0.135 | 0.135 | 0.135 |
| | Difference of wicking velocity (longitudinal and cross directions) | Average | % | 7.1 | 9.4 | 3.0 | 5.3 | 5.6 | 25.2 | 29.2 |
| | | Range | % | 4.2-10.3 | 5.2-13.3 | 0-5.6 | 1.8-9.2 | 1.5-9.5 | 22.0-29.6 | 25.0-34.6 |
| | Difference of wicking velocity (right-side and back-side surfaces) | Average | % | 12.1 | 15.8 | 6.1 | 7.2 | 8.9 | 33.4 | 37.8 |
| | | Range | % | 8.3-16.6 | 11.2-20.1 | 2.0-9.0 | 3.2-9.7 | 3.4-13.1 | 29.6-37.8 | 33.3-41.9 |
| | Surface roughness — right-side | Average | - | 3 | 5 | 1 | 1 | 1 | 3 | 5 |
| | | Range | - | 3-3 | 5-5 | 1-1 | 1-1 | 1-1 | 3-3 | 5-5 |
| | Surface roughness — back-side | Average | - | 1 | 1 | 1 | 1 | 1 | 1 | 1 |
| | | Range | - | 1-1 | 1-1 | 1-1 | 1-1 | 1-1 | 1-1 | 1-1 |
| | Difference of surface roughness (right-side and back-side surfaces) | Average | - | 2 | 4 | 0 | 0 | 0 | 2 | 4 |
| | | Range | - | 2-2 | 4-4 | 0-0 | 0-0 | 0-0 | 2-2 | 4-4 |
| | Production cost *2 | | - | 75 | 80 | 73 | 66 | 69 | 95 | 100 |

(continued)

| Item | | Unit | Example 1 | Example 2 | Example 3 | Example 4 | Example 5 | Comp. Example 1 | Comp. Example 2 |
|---|---|---|---|---|---|---|---|---|---|
| Battery performances | Initial capacity *3 | - | 123 | 118 | 130 | 125 | 123 | 102 | 100 |
| | Number of cycles *4 | - | 119 | 115 | 126 | 123 | 120 | 105 | 100 |
| (Note)<br>*1 Sheet properties: Products were manufactured by 10 lots and represented by the numerical values for the average values or range values (minimum value- maximum value).<br>*2 Production cost: represented by a relative value based on that for Comparative Example 2 as 100.<br>*3 Initial capacity: represented by a relative value based on that for Comparative Example 2 as 100.<br>*4 Number of cycles: represented by a relative value based on that for Comparative Example 2 as 100. | | | | | | | | | |

The followings have been found from Table 1.

(1) While the difference of the wicking velocity between the longitudinal and the cross directions of the separators of Examples 1 and 2 manufactured by an inclined-type papering machine provided with a pond regulator was from 7.1 to 9.4% in the average value, which was somewhat larger compared with that of the separators of Examples 3 to 5 manufactured by a twin wire-type papering machine, the wicking velocity was substantially made uniform in the longitudinal and the cross directions, and it could be estimated that the fiber distribution in the longitudinal and the cross directions was substantially uniform and the fiber orientation in the longitudinal and the cross directions was substantially at random (with no directionality in the fiber orientation) in the separators of Examples 1 and 2.

Further, the difference of the wicking velocity between the longitudinal and the cross directions of the separators of Examples 3 to 5 manufactured by a twin wire-type papering machine was from 3.0 to 5.6 % in the average value and 9.5% at the maximum, so that the wicking velocity was made uniform in the longitudinal and the cross directions, and it could be estimated that the fiber distribution in the longitudinal and the cross directions was uniform and the fiber orientation in the longitudinal and the cross directions was at random in the separators of Examples 3 to 5.

On the contrary, the difference of the wicking velocity between the longitudinal and the cross directions of the separators of Comparative Examples 1 and 2 manufactured by an usual inclined-type papering machine was from 25.2 to 29.2% in the average value and 22.0% at the minimum value, so that the wicking velocity was not made uniform at all in the longitudinal and the cross directions, and it could be estimated that the fiber distribution in the longitudinal and the cross directions was not uniform, or/and, the fiber orientation in the longitudinal and the cross directions was not at random (with directionality in the fiber orientation) in the separators of Comparative Examples 1 and 2.

(2) While the difference of the wicking velocity between the right-side and the back-side surfaces of the separators of Examples 1 and 2 manufactured by an inclined-type papering machine provided with a pond regulator was from 12.1 to 15.8% in the average value, which was somewhat larger compared with that of the separators of Examples 3 to 5 manufactured by a twin wire-type papering machine, the wicking velocity was substantially made uniform at the the right-side and the back-side surfaces, and it could be estimated that there is no significant difference in the fiber distribution and the fiber orientation between the right-side and the back-side surfaces, and the fiber distribution in the direction of the thickness was substantially uniform and the randomness of the fiber orientation in the longitudinal and the cross directions was substantially uniform in the direction of the thickness in the separators of Examples 1 and 2.

Further, the difference of the wicking velocity between the right-side and the back-side surfaces of the separators of Examples 3 to 5 manufactured by a twin wire-type papering machine was from 6.1 to 8.9% in the average value and 13.1% at the maximum, so that the wicking velocity was made uniform at the right-side and the back-side surfaces, and it could be estimated that there is no difference in the fiber distribution and the fiber orientation between the right-side and the back-side surfaces, and the fiber distribution in the direction of the thickness was uniform and the randomness of the fiber orientation in the longitudinal and the cross directions was uniform in the direction of the thickness in the separators of Examples 3 to 5.

On the contrary, the difference of the wicking velocity between the right-side and the back-side surfaces of the separators of Comparative Examples 1 and 2 manufactured by an usual inclined-type papering machine was from 33.4 to 37.8% in the average value and 29.6% at the minimum value, so that the wicking velocity was not made uniform at all at the right-side and the back-side surfaces, and it could be estimated that there is a distinct difference in the fiber distribution or/and the fiber orientation between the right-side and the back-side surfaces, and the fiber distribution in the direction of the thickness was not uniform, or/and, the randomness of the fiber orientation in the longitudinal and the cross directions was not uniform in the direction of the thickness in the separators of Comparative Examples 1 and 2.

(3) For the surface roughness at the right-side and the back-side surfaces of the separators of Examples 1 and 2 manufactured by an inclined-type papering machine provided with a pond regulator, while the surface roughness at the back-side surface was 1 (smooth), the surface roughness at the right-side surface was 3 (small concavity/convexity) to 5 (large concavity/convexity) and the difference of the surface roughness between the right-side and the back-side surfaces was 2 to 4, and the surface roughness and the difference of the surface roughness between the right-side and the back-side surfaces could not be improved.

The surface roughness at the right-side and the back-side surfaces of the separators of Examples 3 to 5 manufactured by a twin wire-type papering machine was 1 both for the right-side and the back-side surfaces, that is, it was smooth and could be confirmed that the difference of the surface roughness between the right-side and the back-side surfaces is 0.

For the surface roughness at the right-side and the back-side surfaces of the separators of Comparative Examples 1 and 2 manufactured by an usual inclined-type papering machine, while the surface roughness at the back-side surface was 1 (smooth), the surface roughness at the right-side surface was 3 (small concavity/convexity) to 5 (large concavity/convexity) and the difference of the surface roughness between the right-side and the back-side surfaces was 2 to 4.

(4) The paper making process was conducted while increasing the paper making speed to 80 m/min, that is, 4 to 8 times in Examples 3 and 5 and further 300 m/min, that is, three times or more further in Example 4 compared with Comparative Examples 1 and 2 but no significant disadvantage was observed in view of the sheet properties. Accordingly, in a case of manufacturing the separator of the invention, it could be confirmed that the paper making speed could be increased up to 300 m/min by using a twin wire-type papering machine.

Further, the paper making speed could be increased also in Examples 1 and 2 using an inclined-type papering machine provided with a pond regulator to 2.4 times compared with Comparative Examples 1 and 2 using an usual inclined-type papering machine, based on the comparison between those having the grammage of the sheet relatively approximate to each other (between Examples 1 and Comparative Example 1, and between Examples 2 and Comparative Example 2). This is because the paper making speed could not be increased in a case of Comparative Examples 1 and 2 using the usual inclined-type papering machine since fibers were tended to be oriented more to the length direction of the sheet remarkably in a case when the paper making speed was increased further, whereas the fibers could be controlled such that the fibers were not oriented more to the length direction of the sheet even when the paper making speed was increased in a case of Examples 1 and 2 using the inclined-type papering machine provided with the pond regulator since the flow rate of the paper stock solution could be controlled by the pond regulator.

Further, it could also be confirmed that since the paper making speed, that is, the production speed could be increased, the production cost for the separators could be decreased by 23 to 31% in a case of Examples 3 to 5 using the twin wire-type papering machine and by 20 to 21% in a case of Examples 1 and 2 using the inclined-type papering machine provided with the pond regulator compared with Comparative Examples 1 and 2 using the usual inclined-type papering machine, based on the comparison between those having the grammage of the sheet relatively approximate to each other (Examples 1, 3 and 4 relative to Comparative Example 1, and Examples 2 and 5 relative to Comparative Example 2).

(5) In the battery using the separators of Examples 1 and 2, the initial capacity could be improved by 18 to 23% and the number of cycles could also be improved by 15 to 19% compared with the battery using the separator of Comparative Example 2. In the battery using the separators of Examples 3 to 5, the initial capacity could be improved by 23 to 30% and the number of cycles could also be improved by 20 to 26% compared with the battery using the separator of Comparative Examples 2.

Further, the followings have been found from Fig. 3 and Fig. 4.

(1) From Fig. 3, in the separator of Comparative Example 2 manufactured by the usual inclined-type papering machine, accumulation of fine glass fibers was observed in the lower layer (layer on the side of back-side surface) of the separator and it could be confirmed that the fiber distribution was localized in the direction of the thickness of the separator and the fiber distribution was not uniform. On the contrary, in the separator of Examples 2 manufactured by the inclined-type papering machine provided with the pond regulator, and the separators of Examples 3 to 5 manufactured by the twin wire-type papering machine, localization of the fiber distribution as observed in Comparative Example 2 was not observed in the upper layer-intermediate layer-lower layer of the separator and it could be confirmed that the fiber distribution was uniform in the direction of the thickness of the separator.

(2) From Fig. 4, in the separator of Comparative Example 2, accumulation of fine glass fibers was observed only at the back-side surface of the separator and it could be confirmed that the fiber distribution was not uniform at the right-side and the back-side surfaces of the separator. On the contrary, in the separators of Examples 2 to 5, no difference was observed at all for the fiber distribution between the right-side and the back-side surfaces of the separators and it could be confirmed that the fiber distribution was uniform at the right-side and the back-side surfaces of the separator.

(3) From Fig. 4, in the separator of Comparative Example 2, orientation was observed more in the longitudinal direction both at the right-side and the back-side surfaces of the separator as the orientation of the glass fibers and it could be confirmed that the fiber orientation was localized in the longitudinal and the cross directions of the separator and the fiber orientation was not at the random orientation. On the contrary, in the separators of Examples 3 to 5, localization of the fiber orientation as observed in Comparative Example 2 was not observed at the right-side and the back-side surfaces of the separators and it could be confirmed that fiber orientation was in quite at random in the longitudinal and the cross directions of the separator. In the separator of Example 2, compared with the separators of Examples 3 to 5, substantially identical random orientation was present at the back-side surface, and somewhat more orientation in the longitudinal direction was observed at the right-side surface, but it is not so remarkable as in the separator of Comparative Example 2.

(4) The foregoings support the result for the difference of the wicking velocity between the longitudinal and the cross directions, difference of the wicking velocity between the right-side and the back-side surfaces, and the difference of the surface roughness between the right-side and the back-side surfaces shown in Table 1.

Industrial Applicability

Since the separator for use in storage battery according to the invention comprising a paper sheet formed by wet process and mainly composed of glass fibers is processed into paper sheet in a state where glass fibers in the paper stock solution are uniformly stirred by using an inclined-type papering machine provided with a pond regulator or a twin wire-type papering machine, a separator of a sheet in which the fiber distribution is uniform in the longitudinal and the cross directions, the fiber orientation is at random in the longitudinal and the cross directions, and the fiber distribution is uniform in the direction of the thickness, and the randomness of the fiber orientation in the longitudinal and cross directions is uniform in the direction of the thickness can be obtained. Accordingly, in the storage battery using the separator for use in storage battery according to the invention, the gas recombination reaction is made uniform, the moveability of an electrolyte during charge and discharge is also made uniform, and it can provide higher performance and stabilization of the battery performance, particularly, when it is applied to a valve regulated lead-acid battery.

Further, in a case where the separator for use in storage battery according to the invention is formed, particularly, by using a twin wire-type papering machine, a separator at which both of the right-side and the back-side surfaces of the sheet are smooth and with no difference in the surface roughness between the right-side and the back-side surfaces can be obtained and it provides an effect of improving the adhesion between the separator and an electrode plate as well as an effect that the gas recombination reaction of the separator is more uniform in the storage battery using the separator.

Further, in a case of manufacturing the separator for use in storage battery according to the invention by using an inclined-type papering machine provided with a pond regulator or a twin wire-type papering machine, since it can be processed into paper at higher speed than in the existent inclined-type papering machine without especially ruining the quality of the sheet, it is possible to improve the production efficiency and greatly reduce the production cost for the separator.


### Claims

1. A separator for use in storage battery comprising a paper sheet formed by wet process and composed of glass fibers of 100% by weight,
   wherein the average value for a difference of a wicking velocity (time required for absorbing up to 5 cm height) between the longitudinal and the cross directions of the separator for use in storage battery is between 3% and 11% and
   wherein the average value for a difference of a wicking velocity (time required for absorbing up to 5 cm height) between the right-side and the back-side surfaces of the separator for use in storage battery is between 6.1 % and 17%.

2. A separator for use in storage battery according to claim 1, wherein the average value for a difference of a wicking velocity (time required for absorbing up to 5 cm height) between the longitudinal and the cross directions of the separator for use in storage battery is between 3% and 7%.

3. A separator for use in storage battery according to claim 1, wherein the average value for a difference of a wicking velocity (time required for absorbing up to 5 cm height) between the right-side and the back-side surfaces of the separator for use in storage battery is between 6.1 % and 10%.

4. A separator for use in storage battery according to claim 1, wherein the separator for use in storage battery is manufactured by using an inclined-type paper machine provided with a pond regulator.

5. A separator for use in storage battery according to claim 1, wherein the separator for use in storage battery is manufactured by using a twin wire-type paper machine.

6. A separator for use in storage battery according to claim 1, wherein it is used for a valve regulated lead-acid battery.

7. A storage battery **characterized by** using a separator for use in storage battery according to claim 1.


### Patentansprüche

1. Separator zur Benutzung in einer Speicherbatterie, aufweisend ein durch einen Nassprozess gebildetes und aus 100 Gewichts-% Glasfasern zusammengesetztes Papierblatt,
   wobei der Mittelwert für eine Differenz einer Dochtwirkungsgeschwindigkeit (Zeit, die zum Absorbieren bis zu 5 cm Höhe erforderlich ist) zwischen der Längs- und der Querrichtung des Separators zum Benutzen in der Speicherbatterie zwischen 3 % und 11 % liegt, und
wobei der Mittelwert für eine Differenz einer Dochtwirkungsgeschwindigkeit (Zeit, die zum Absorbieren bis zu 5 cm Höhe erforderlich ist) zwischen der richtigseitigen Fläche und der rückseitigen Fläche des Separators zur Benutzung in der Speicherbatterie zwischen 6,1 % und 17 % liegt.

2. Separator zur Benutzung in einer Speicherbatterie nach Anspruch 1, wobei der Mittelwert für eine Differenz einer Dochtwirkungsgeschwindigkeit (Zeit, die zum Absorbieren bis zu 5 cm Höhe erforderlich ist) zwischen der Längs- und der Querrichtung des Separators zur Benutzung in der Speicherbatterie zwischen 3 % und 7 % ist.

3. Separator zur Benutzung in einer Speicherbatterie nach Anspruch 1, wobei der Mittelwert für eine Differenz einer Dochtwirkungsgeschwindigkeit (Zeit, die zum Absorbieren bis zu 5 cm Höhe erforderlich ist) zwischen der richtigseitigen Fläche und der rückseitigen Fläche des Separators zur Benutzung in der Speicherbatterie zwischen 6,1 % und 10 % ist.

4. Separator zur Benutzung in einer Speicherbatterie nach Anspruch 1, wobei der Separator zur Benutzung in der Speicherbatterie zur Benutzung einer mit einem Flussratenregler versehenen Geneigttyp-Papiermaschine hergestellt ist.

5. Separator zur Benutzung in einer Speicherbatterie nach Anspruch 1, wobei der Separator zur Benutzung in der Speicherbatterie durch Benutzung einer Doppelsiebtyp-Papiermaschine hergestellt ist.

6. Separator zur Benutzung in einer Speicherbatterie nach Anspruch 1, wobei er für eine ventilgeregelte Blei-Säure-Batterie benutzt ist.

7. Speicherbatterie, **gekennzeichnet durch** Benutzung eines Separators zur Benutzung in einer Speicherbatterie nach Anspruch 1.


**Revendications**

1. Séparateur destiné à être utilisé dans une batterie de stockage comprenant une feuille de papier formée par un procédé par voie humide et composée de fibres de verre de 100 % en poids,
dans lequel la valeur moyenne pour une différence d'une vitesse de pénétration capillaire (temps requis pour l'absorption jusqu'à 5 cm de hauteur) entre les directions longitudinale et transversale du séparateur destiné à être utilisé dans une batterie de stockage est comprise entre 3 et 11 % et
dans lequel la valeur moyenne pour une différence d'une vitesse de pénétration capillaire (temps requis pour l'absorption jusqu'à 5 cm de hauteur) entre les surfaces côté droit et côté arrière du séparateur destiné à être utilisé dans une batterie de stockage est comprise entre 6,1 et 17 %.

2. Séparateur destiné à être utilisé dans une batterie de stockage selon la revendication 1, dans lequel la valeur moyenne pour une différence d'une vitesse de pénétration capillaire (temps requis pour l'absorption jusqu'à 5 cm de hauteur) entre les directions longitudinale et transversale du séparateur destiné à être utilisé dans une batterie de stockage est comprise entre 3 et 7 %.

3. Séparateur destiné à être utilisé dans une batterie de stockage selon la revendication 1, dans lequel la valeur moyenne pour une différence d'une vitesse de pénétration capillaire (temps requis pour l'absorption jusqu'à 5 cm de hauteur) entre les surfaces côté droit et côté arrière du séparateur destiné à être utilisé dans une batterie de stockage est comprise entre 6,1 et 10 %.

4. Séparateur destiné à être utilisé dans une batterie de stockage selon la revendication 1, dans lequel le séparateur destiné à être utilisé dans une batterie de stockage est fabriqué en utilisant une machine à papier inclinée dotée d'un régulateur de bassin.

5. Séparateur destiné à être utilisé dans une batterie de stockage selon la revendication 1, dans lequel le séparateur destiné à être utilisé dans une batterie de stockage est fabriqué en utilisant une double machine à papier câblée.

6. Séparateur destiné à être utilisé dans une batterie de stockage selon la revendication 1, dans lequel il est utilisé pour une batterie plomb-acide régulée par valve.

7. Batterie de stockage **caractérisée par** l'utilisation d'un séparateur destiné à être utilisé dans une batterie de stockage selon la revendication 1.

# Fig.1

dewatering

# Fig.2

dewatering

# Fig.3

SEM photograph of cross section

# Fig. 4

| | example | | | | comparative example |
|---|---|---|---|---|---|
| | 2 | 3 | 4 | 5 | 2 |
| ① opposite face of paper (right-side surface) | | | | | |
| ② face of paper (back-side surface) | | | | | |

# Fig.5